# EUROPÄISCHE PATENTSCHRIFT

(11) **EP 0 710 633 B1**
(45) Veröffentlichungstag und Bekanntmachung des Hinweises auf die Patenterteilung: **28.04.1999**
(21) Anmeldenummer: 95117199.0
(22) Anmeldetag: 02.11.1995
(51) Int. Cl.: C04B 28/02, C04B 38/00, C04B 24/26, E01C 7/14

(54) **Dränbeton**
Drain concrete
Béton de drainage

(30) Priorität: 07.11.1994 DE 4439689
(43) Veröffentlichungstag der Anmeldung: 08.05.1996
(73) Patentinhaber: Clariant GmbH, 65929 Frankfurt am Main (DE)
(72) Erfinder: Berg, Volkmar, Dr., D-76676 Graben/Neudorf (DE); Riffel, Siegfried, D-68753 Waghäusel (DE)

(56) Entgegenhaltungen:
- EP-A- 0 565 987
- WO-A-89/09196
- WO-A-90/06290
- DE-A- 1 953 158
- DE-A- 1 953 159
- DE-A- 2 306 360
- DE-B- 1 121 530
- FR-A- 2 613 356
- US-A- 4 514 531

## Beschreibung

Die Erfindung betrifft einen lärmmindernden, hochabsorbierenden und wasserdurchlässigen Beton, sogenannten Dränbeton, Verfahren zu dessen Herstellung sowie dessen Verwendung als offenporigen Fahrbahnbelag.

In den letzten Jahren ist das Umweltbewußtsein der Bevölkerung auch im Hinblick auf Lärmbelästigung erheblich angestiegen. Aufgrund des kräftig gestiegenen Verkehrsaufkommens, insbesondere auf den Bundesfernstraßen, nimmt das Thema Verkehrslärm heute eine zentrale Rolle ein.

Die Ursachen für den Verkehrslärm sind zu finden in:
- Antrieb des Fahrzeugs (Antriebsgeräusch/Motorgeräusch),
- Abrollen der Reifen auf der Straßendecke (Reifen-Fahrbahngeräusch/Rollgeräusch).

Die Rollgeräusche haben hauptsächlich die folgenden Ursachen:
a) Radiale Reifenvibration:
   - Aufprall der Profilelemente auf die Straßenoberfläche,
   - Zusammenpressung des Reifenprofils als Folge der Oberflächentextur,
b) Resonanz der Luft zwischen Reifen und Straßendecke:
   - Rohrresonanz,
   - Helmholzresonanz,
   - "Air Pumping",
c) Adhäsion:
   - Tangentialvibrationen als Folge von "stick-slip"-Bewegungen,
   - Losreißen von Profilelementen,
d) Kollision von Profilelementen:
   - Wasserfilm und Beschleunigung von Wassertropfen (nur bei nasser Straßendecke).

Der Gesetzgeber hat dem gestiegenen Lärmaufkommen Rechnung getragen mit der "Richtlinie für den Lärmschutz an Straßen - Ausgabe 1990 - RLS - 90" sowie mit der "16. Verordnung zur Durchführung des Bundesimissionsschutzgesetzes" (Verkehrslärmschutzverordnung - 16. BImScH V). Zur Erreichung dieser Ziele werden nach wie vor hauptsächlich die folgenden Maßnahmen getroffen:
- Der Lärm wird an der Quelle, also dem Kraftfahrzeug beziehungsweise den Kraftfahrzeugreifen, verringert.
- Die Schallausbreitungsgebiete werden durch Schutzwände und Schutzwälle eingegrenzt.

In jüngster Zeit sind auch Anstrengungen unternommen worden, die Lärmausbreitung vom Straßenbelag zu verringern. Von großem Einfluß auf die Schallemission einer Straßendecke sind
- die Megatextur (Texturwellenlänge 50 - 250 mm),
- die Macrotextur (Texturwellenlänge 1 - 50 mm),
- die akustische Impedanz (Schallabsorption).

Beim Befahren einer porösen Straßendecke kann die Luft unter dem Fahrzeugreifen in die Hohlräume des Straßenbelags entweichen, so daß insbesondere der hochfrequente Bereich der Rollgeräusche reduziert wird. Die Absorption soll, möglichst effektiv im Frequenzbereich des menschlichen Gehörs stattfinden und zwar am besten in dem besonders empfindlichen Bereich zwischen ca. 200 und 2000 Hz.

Die akustische Impedanz einer offenporigen Straßendecke wird bestimmt von:
- der Porosität (zugänglicher Hohlraumgehalt),
- dem Strömungswiderstand (Durchlässigkeit),
- dem Strukturfaktor (Porenstruktur im zugänglichen Hohlraum, Verbindung der Poren untereinander),
- der Schichtstärke.

In der Praxis haben sich hohlraumreiche Beläge als Deckschicht bewährt, beispielsweise Dränasphalt oder "Flüsterasphalt". Mit offenporigen beziehungsweise hohlraumreichen Straßenbelägen läßt sich gegenüber hergebrachten dichtenBelägen der Schallpegel um bis zu 5 dB(A) reduzieren. Für offenporige Asphaltbeläge wird jedoch derzeit eine Lebensdauer von maximal 6 Jahren angesetzt, so daß solche offenporigen Beläge wesentlich öfter erneuert werden müssen als konventionell dichte Asphaltbeläge.

Beton hat gegenüber Asphalt grundsätzlich den Vorteil einer wesentlich höheren Lebensdauer, so daß Betondecken seltener Instandsetzungsarbeiten erfordern. Es wird daher angestrebt, Betonbeläge mit entsprechend lärmmindernden Eigenschaften auszustatten (Intron report No. 94 229, Porous Concrete - Laboratory tests, Seiten 11-12). Daneben sollen jedoch die positiven Eigenschaften des Betons, beispielsweise hohe Dauerhaftigkeit, erhalten bleiben. [0011 ] Es ist grundsätzlich bekannt, Beton zur Verbesserung der anwendungstechnischen Eigenschaften mit Kunststoffen zu modifizieren. Gemäß DE-A 42 12 325 mit einer Styrol-/Acrylat-Dispersion modifizierter Beton ergibt wasserundurchlässige Formkörper. Für eine ausreichende Wasserdurchlässigkeit und eine hohe Schallabsorption sollte die Porosität und der Strukturfaktor des Betons jedoch möglichst hoch sein.

Bei den bisherigen Versuchen, Kunststoff-modifizierte poröse Betone herzustellen, hat sich gezeigt, daß Hohlraumgehalt und Festigkeit gegenläufige Tendenzen zeigen. Je höher der Hohlraumgehalt, um so geringer ist die Festigkeit des Straßenbelages. Gleichzeitig zeigte sich bei einem akustisch gut wirksamen Hohlraumgehalt die Festigkeit für einen hoch belasteten Straßenbelag als nicht ausreichend. Bei den bisherigen Versuchen hat sich auch die Verbindung zwischen dem akustisch wirksamen Straßenbelag und dem Unterbeton als nicht haltbar genug herausgestellt (Intron report No. 94 229, Porous Concrete - Laboratory tests, Seite 73).

Aufgabe der vorliegenden Erfindung war daher die Entwicklung eines Dränbetons, der die geforderte Lärmreduzierung im Straßenbelag bewirkt, alle Anforderungen an die Verkehrssicherheit erfüllt, gute Haftung zum Untergrund aufweist und eine hohe Lebensdauer besitzt.

Die Aufgabe wurde gelöst durch sogenannten Einkornbeton, Beton mit einer engen Korngrößenverteilung, der eine anionische Styrol/(Meth)Acrylat-Dispersion enthält.

Gegenstand der Erfindung ist ein Dränbeton mit 10 bis 35 Voi.% Hohlraumvolumen, enthaltend ein hydraulisches Bindemittel aus der Reihe der Zemente und ein polymeres Bindemittel in Form eines anionischen Styrol/(Meth)Acrylat-Copolymerisats, dessen Mindestfilmbildetemperatur (MFT) vorzugsweise oberhalb der Umgebungstemperatur bei der Verarbeitung des Dränbetons liegt, sowie Zuschlagstoffe mit Korngrößen im Bereich von 2 bis 32 mm.

Der Anteil des polymeren Bindemittels beträgt vorzugsweise 5 bis 40 Gew.-%, insbesondere 10 bis 20 Gew.- %, bezogen auf die Masse des hydraulischen Bindemittels. Die MFT des polymeren Bindemittels liegt vorzugsweise oberhalb von 30 °C und beträgt insbesondere 33 bis 60 °C, besonders bevorzugt 35 bis 50 °C.

Erfindungsgemäß für den Einsatz in Dränbeton besonders geeignet sind beispielsweise wäßrige Kunststoffdispersionen auf der Basis von anionischen Copolymerisaten aus folgenden Monomeren:

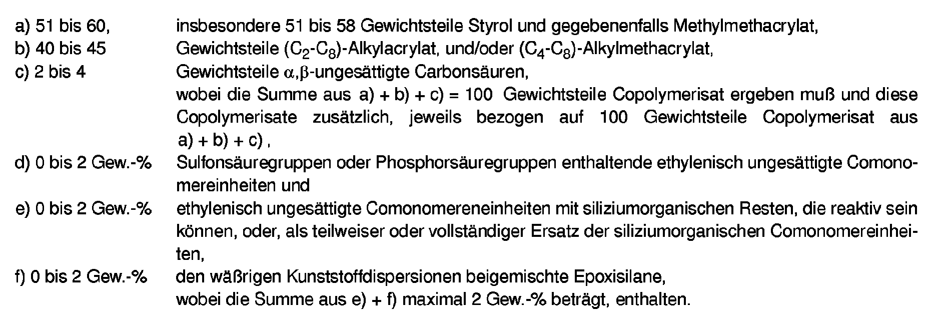

Besonders bevorzugte erfindungsgemäße Kunststoffdispersionen sind beispielsweise solche auf der Basis von anionischen Copolymerisaten folgender Zusammensetzung:

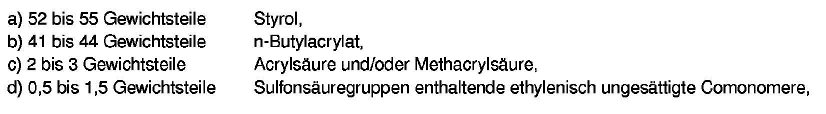

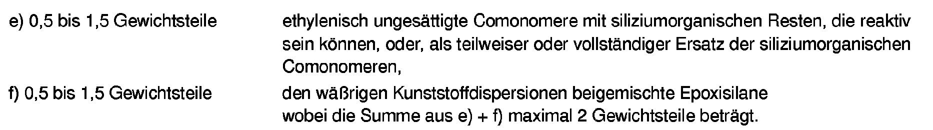

Durch erfindungsgemäße Gehalte an Comonomereinheiten mit siliziumorganischen Resten in den anionischen Copolymerisaten oder durch den wäßrigen Kunststoffdispersionen erfindungsgemäß beigemischte Epoxisilane kann bei der erfindungsgemäßen Verwendung der Kunststoffdispersionen in Betonmischungen die Chemikalienbeständigkeit des erhärteten Betons noch verbessert werden.

Als Emulgatoren enthalten die Dispersionen vorzugsweise übliche ionische und insbesondere anionische und/oder übliche nichtionische tensioaktive Verbindungen in den bei Emulsionspolymerisationen üblichen Mengen. Beispielsweise enthalten die Kunststoffdispersionen als Emulgatoren, jeweils bezogen auf das anionische Copolymerisat, 0,3 bis 2 Gew.-%, vorzugsweise 0,5 bis 1,5 Gew.-%, insbesondere 0,6 bis 1 Gew.-%, anionische Emulgatoren, vorzugsweise Sulfogruppen enthaltende Emulgatoren, insbesondere Alkalisalze von Schwefelsäurehalbestern oxethylierter Alkylphenole, und 1 bis 5 Gew.-%, vorzugsweise 1,5 bis 3 Gew.-%, insbesondere 2 bis 2,5 Gew.-%, nichtionogene Emulgatoren, vorzugsweise Alkylphenolpolyglykolether, insbesondere Nonylphenolpolyglykolether oder Tributylphenolpolyglykolether mit vorzugsweise 15 bis 50 Ethylenoxideinheiten.

Als erfindungsgemäß einsetzbare hydraulische Bindemittel eignen sich vorzugsweise alle in amorpher Form vorliegenden anorganischen Stoffe, die mit Wasser unter Ausbildung zementartig vernetzender Strukturen chemisch reagieren können. Bevorzugt sind alle Zementarten gemäß der DIN 1164 oder Spezialzemente mit bauaufsichtlicher Zulassung, insbesondere Portlandzement, sowie Kompositzemente, also Mischungen dieser Zementarten mit Stoffen, die die Wirkung von Zement ergänzen oder verbessern können, vorzugsweise Flugasche aus Steinkohleverbrennungsprozessen oder aus dem Siliziumherstellungsprozeß.

Der Mengenanteil des hydraulischen Bindemittels beträgt vorzugsweise 10 bis 35 Gew.-%, insbesondere 10 bis 30 Gew.-%, besonders bevorzugt 15 bis 25 Gew.%, bezogen auf den Dränbeton.

Die erfindungsgemäß zu verwendenden Zuschlagstoffe besitzen vorzugsweise eine Korngröße im Bereich von 2 bis 32 mm, insbesondere 4 bis 9 mm, besonders bevorzugt 5 bis 8 mm. Besonders bevorzugt ist außerdem eine möglichst gleichmäßige Korngrößenverteilung.

Als geeignete Zuschlagstoffe seien beispielsweise Edelsplitt 100 %, Splitt 100 %, Rundkorn 100 % sowie Mischungen dieser Zuschlagstoffe genannt.

Der Mengenanteil der Zuschlagstoffe beträgt vorzugsweise 65 bis 85 Gew.-%, insbesondere 70 bis 80 Gew.- %, bezogen auf die Masse des Dränbetons.

Bei Bedarf kann der Dränbeton Zusatzmittel, beispielsweise Betonverflüssiger, Fließmittel, Erstarrungsverzögerer, Stabilisatoren enthalten. Als Betonzusatzstoffe, die die mechanischen Eigenschaften des Festbetons beieinflussen, eignen sich auch Fasern aus Kunststoff, Glas, Metall, Kohle und Cellulose.

Die Herstellung des erfindungsgemäßen Dränbetons erfolgt durch Mischen des hydraulischen Bindemittels, des polymeren Bindemittels, der Zuschlagstoffe sowie gegebenenfalls weiterer Zusatzmittel und/oder Zusatzstoffe mit Wasser. Vorzugsweise werden zunächst Zuschlagstoffe und hydraulische Bindemittel mit Wasser vermischt und anschließend das polymere Bindemittel in Form einer wäßrigen Dispersion zugesetzt.

Erfindungsgemäß beträgt das Hohlraumvolumen des Dränbetons vorzugsweise 10 bis 35 Vol.%, insbesondere 15 bis 30 Vol.-%, besonders bevorzugt 20 bis 25 Vol.%.

Der Wasser-Zementwert (w/z-Wert) des Dränbetons liegt vorzugsweise bei 0,15 bis 0,50, insbesondere 0,16 bis 0,40, besonders bevorzugt bei 0,20 bis 0,30.

Der erfindungsgemäße Dränbeton weist nach 28 Tagen nach der Herstellung vorzugsweise eine Betondruckfestigkeit von ≥ 15 N/mm², insbesondere ≥ 25 N/mm², besonders bevorzugt ≥ 39 N/mm², eine Biegezugfestigkeit von > 3,5 N/mm², insbesondere ≥ 5,0 N/mm², besonders bevorzugt > 6,5, eine Spaltzugfestigkeit von > 2,0 N/mm², insbesondere > 2,5, besonders bevorzugt > 3 N/mm², eine Oberflächenzugfestigkeit von > 2,0 N/mm², insbesondere > 3,0 N/mm², besonders bevorzugt ≥ 3,5 N/mm², und einen statischen E-Modul von < 25.000 N/mm², insbesondere < 20.000 N/mm², besonders bevorzugt 15.000 N/mm², auf.

Der erfindungsgemäße Dränbeton eignet sich aufgrund seiner besonderen Eigenschaften zur Herstellung eines Fahrbahnbelags. Ein derartiger Fahrbahnbelag ist wasserdurchlässig, lärmmindernd und hochabsorbierend und erfüllt alle Anforderungen an die Verkehrssicherheit.

Dazu kann auf einen bereits erhärteten Unterbeton zunächst eine Haftbrücke appliziert werden und auf die Haftbrücke direkt der Dränbeton eingebaut werden. Falls der Unterbeton noch frisch ist, kann der Dränbeton direkt auf den frischen Unterbeton aufgetragen werden. Bei dieser Vorgehensweise kann gegebenenfalls die Haftbrücke entfallen. Durch die erfindungsgemäße Modifizierung des Dränbetons und gegebenenfalls der Haftbrücke mit dem anionischen Styrol/(Meth)Acrylat-Copolymer wird eine ausreichende Haftung auf dem Untergrund bzw. zwischen dem Unterbeton und dem Oberbeton (Dränbeton) erzielt. Gegebenenfalls kann der Dränbeton auch einlagig direkt auf dem Untergrund und/oder auf einer ungebundenen oder gebundenen Tragschicht verlegt werden. Die einlagige Bauweise ist besonders für wasserdurchlässige Verkehrsflächen geeignet. Die Tragschicht ist hierzu entsprechend wasserdurchlässig herzustellen.

FIG. 1 zeigt eine Deckschicht aus einem Dränbeton auf einem Unterbeton. Deutlich zu erkennen ist die Porosität und die relativ gleichmäßige Korngrößenverteilung in der Dränbeton-Matrix.

FIG. 2 zeigt einen Fahrbahnaufbau aus Unterbeton, Haftbrücke und Dränbeton.

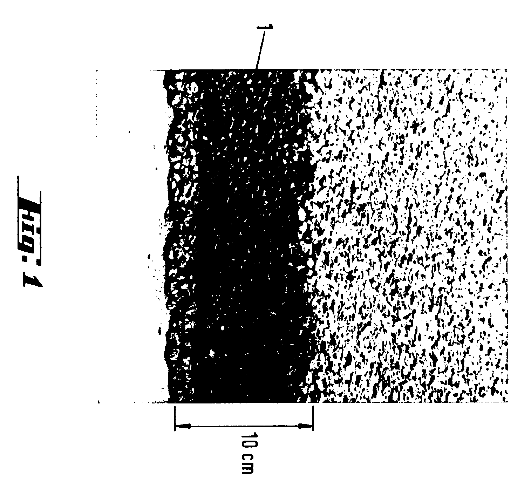

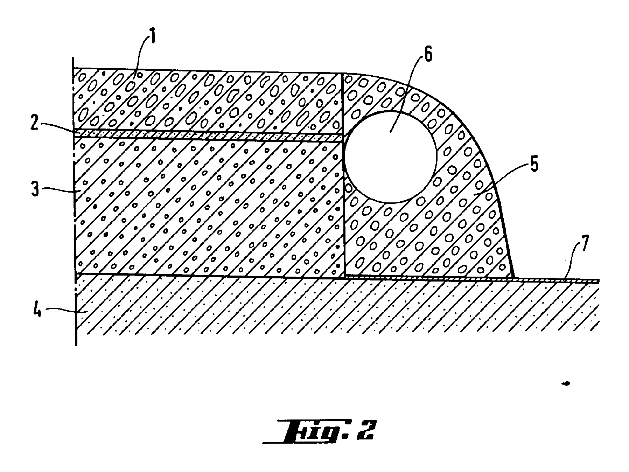

Die in der FIG. 1 und der FIG. 2 angeführten Positionszahlen bedeuten:
1 Dränbeton (Oberbeton)
2 Haftbrücke
3 Deckenbeton (Unterbeton)
4 Tragschicht
5 Einkornbeton
6 Dränage
7 Abdichtung

Der erfindungsgemäße Dränbeton führt im Straßenbelag zu einer Reduzierung der Geräuschemission vorzugsweise um mindestens 3 dB(A), insbesondere um mindestens 4 dB(A).

Der erfindungsgemäße Dränbeton ist ausreichend wasserdurchlässig, so daß Regenwasser ohne Pfützenbildung abgeführt werden kann. Dadurch wird auch die Verkehrssicherheit wesentlich erhöht, da die Gefährdung durch Aquaplaning und durch Sichtbehinderung infolge von Sprühfahnen verringert wird.

### Beispiele

Der in den Beispielen angegebene Wasser-Zement-Wert (w/z-Wert) bezieht sich auf den Quotienten aus der Summe von Zusatzwasser, Zuschlagfeuchte und Wasseranteil der Dispersion geteilt durch die Zementmasse.

### Herstellung von Dränbeton

Der Dränbeton wird hergestellt in einer stationären oder mobilen Mischanlage, einem Zwangsmischer mit guter Mischwirkung. Die Mischzeit beträgt je nach Güte der Mischwirkung mindestens 60 Sekunden nach Zugabe aller Komponenten. Für die Herstellung des Dränbetons wird folgende Rezeptur verwendet.

### Beispiel 1

[0040]

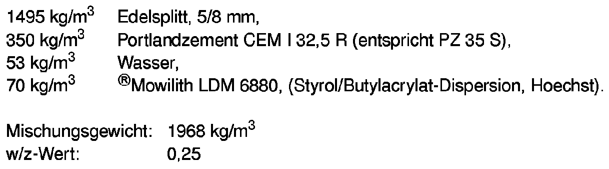

### Beispiel 2

[0041]

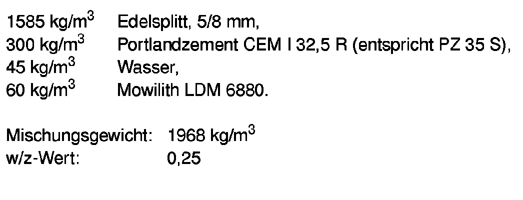

Nach der Zugabe der Komponenten Edelsplitt, Zement und Wasser wird etwa 20 Sekunden gemischt, anschließend wird die Dispersion zugegeben. Die Mischzeit nach der Zugabe der Dispersion beträgt mindestens 60 Sekunden. Mit dieser Rezeptur wird ein Dränbeton mit ca. 20 % zugänglichem Hohlraumvolumen hergestellt.

### Herstellung eines Straßenbelags

### Herstellung einer Haftbrücke

Die Haftbrücke wird in einem hochtourigen Mischer (1000 bis 1500 U/min), beispielsweise Ultramischer U 80 (Fa. Putzmeister, Aichtal) oder ^{e}lnjecto-Compact 50/70 (Fa. Häny, Schweiz) hergestellt. Die Mischzeit mit diesem Mischer beträgt ca. 30 Sekunden.

Die Herstellung der Mischung erfolgt unter der Zugabe der Rohstoffe in folgender Reihenfolge:
12,5 kg Wasser,
7,5 kg Dispersion Mowilith LDM 6880,
0,2 kg ⁸Addiment, Fließmittel FMF (Heidelberger Baustofftechnik),
50,0 kg Portlandzement CEM I 32,5 R.
w/z-Wert: 0,33

Die Komponenten Wasser, Dispersion und Fließmittel werden nach Mischanweisung abgewogen und in dem Ultramischer ca. 5 Sekunden vorgemischt. Nach der Vormischphase wird der Zement zudosiert. Nach Zugabe aller Komponenten wird maximal 20 Sekunden gemischt.

### Verlegung des Unterbetons

Der Unterbeton wird in der vorgesehenen Einbaudicke als klassischer Straßenbeton in einer der bekannten Fertigungstechniken, beispielsweise Gleitschalungsfertiger, Schienenfertiger, eingebaut. Die Oberfläche erhält durch Glätten und Erzielung einer Textur unter Zuhilfenahme eines Jutetuchs die endgültige Oberflächentextur. Die Nachbehandlung dieses Betons erfolgt durch Feuchthalten, beispielsweise Berieselung mit Wasser oder flüssigen Nachbehandlungsmitteln oder durch Abdecken mit feuchten Tüchern und/oder Folien. Die Oberflächenzugfestigkeit des Unterbetons muß mindestens 2,0, vorzugsweise 3,0 N/mm², betragen. Falls der vorgenannte Prüfwert nicht erreicht wird, muß durch geeignete Oberflächenbearbeitungsmaßnahmen, beispielsweise Kugelstrahlen, die Tragfähigkeit des Unterbetons verbessert werden. Quer- und Längsfugen im Unterbeton werden konventionell nach den geltenden Vorschriften und Bestimmungen ausgebildet, beispielsweise Fugenprofile. Die Verdübelung und Verankerung der Einzelplatten erfolgt in der Mitte des Unterbetons. Der Abstand sowie die Anzahl und die Abmessungen der Dübel und Anker erfolgt nach den geltenden Vorschriften und Bestimmungen.

### Applikation der Haftbrücke

Auf den angefeuchteten, tragfähigen Betonuntergrund wird die frisch hergestellte Haftbrücke von Hand oder im Spritzauftrag appliziert. Die Auftragsmenge liegt je nach Rauheit des Untergrunds im Mittel bei > 2000 g/m^{2.} Erfolgt der Auftrag der Haftbrücke von Hand, wird die Haftbrücke mit einem harten Besen mechanisch eingebürstet. Alternativ wird die Haftbrücke maschinell, beispielsweise mit einem Sprühbalken oder einer Sprührampe oder einzelnen Sprühdüsen, aufgetragen. Die Haftbrücke wird aufgrund der begrenzten offenen Verarbeitungszeit nur unmittelbar vor dem Straßenfertiger vorgelegt.

### Einbau des Dränbetons

Der Dränbeton wird mit einem Straßenfertiger, der über einen Betonstampfer, eine Hochverdichtungsbohle, eine Preßleiste und Nachläufer verfügt, in die frisch vorgelegte Haftbrücke eingebaut. Der Fertiger, der über eine automatische Höhennivellierung verfügt, wird zum Erreichen der erforderlichen Einbaudicke und der optimalen Ebenheit am Leitdraht geführt. Die Einbauhöhe kann auch mit einem Gleitschuh von einer bereits vorhandenen Oberfläche abgenommen werden. Der Dränbeton besitzt bereits direkt hinter dem Fertiger die endbearbeitete Oberfläche, die aufgrund des niedrigen w/z-Wertes des eingebauten Dränbetons sofort nachbehandelt wird. Die Oberfläche wird mit feuchten Tüchern, beispielsweise Jute oder ^{®}Geotextil, und/oder Folien (PE-Folie, Thermofolie) abgedeckt. Die Dränbetondeckschicht kann mit und ohne Scheinfugen hergestellt werden. Falls Längs- oder Querfugen vorgesehen sind, erfolgt nur ein 3 mm Kerbschnitt (Schnittiefe > 30% der Einbaudicke). Der Kerbschnitt wird im Dränbeton nicht vergossen. Die Längs- und Querscheinfugen im Dränbeton werden deckungsgleich über dem Fugenraster des Unterbetons angeordnet. Der Fugenschnitt erfolgt, falls vorgesehen, rechtzeitig nach ausreichender Erhärtung des Dränbetons.

### Bautechnische Prüfung

### zu Beispiel 1

[0049]

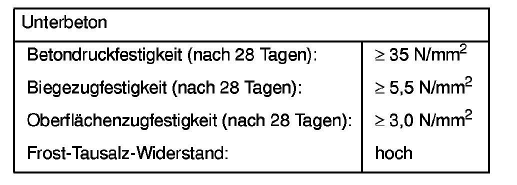

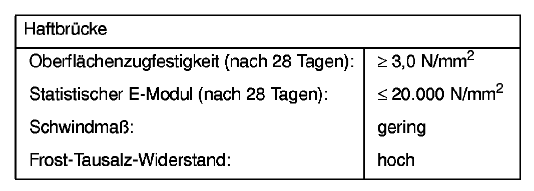

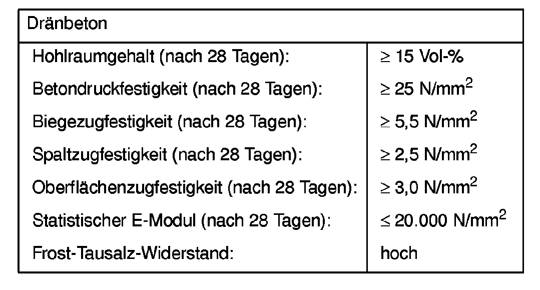

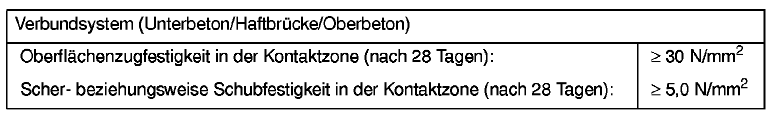

## Patentansprüche

1. Dränbeton mit 10 bis 35 Vol.-% Hohlraumvolumen, enthaltend ein hydraulisches Bindemittel aus der Reihe der Zemente und ein polymeres Bindemittel in Form eines anionischen Styrol/(Meth)Acrylat-Copolymerisats sowie Zuschlagstoffe mit Korngrößen im Bereich von 2 bis 32 mm.

2. Dränbeton nach Anspruch 1, dadurch gekennzeichnet, daß die Mindestfilmbildetemperatur (MFT) des polymeren Bindemittels > 30 °C beträgt.

3. Dränbeton nach Anspruch 1, dadurch gekennzeichnet, daß die Mindestfilmbildetemperatur (MFT) des polymeren Bindemittels 35 bis 50 °C beträgt.

4. Dränbeton nach Anspruch 1, dadurch gekennzeichnet, daß das Hohlraumvolumen 15 bis 30 Vol.% beträgt.

5. Dränbeton nach Anspruch 1, dadurch gekennzeichnet, daß der Anteil des polymeren Bindemittels 5 bis 40 Gew.- %, bezogen auf die Masse des hydraulischen Bindemittels, beträgt.

6. Dränbeton nach Anspruch 1, dadurch gekennzeichnet, daß der Mengenanteil des hydraulischen Bindemittels 10 bis 30 Gew.-%, bezogen auf die Masse des Dränbetons, beträgt.

7. Dränbeton nach Anspruch 1, dadurch gekennzeichnet, daß die Korngröße des Zuschlagstoffes 5 bis 8 mm beträgt.

8. Verfahren zur Herstellung eines Dränbetons nach Anspruch 1, durch Mischen des hydraulischen Bindemittels, des polymeren Bindemittels, der Zuschlagstoffe und gegebenenfalls weiterer Zusatzmittel und/oder Zusatzstoffe mit Wasser.

9. Verfahren nach Anspruch 8, dadurch gekennzeichnet, daß zunächst Zuschlagstoffe und hydraulische Bindemittel mit Wasser vermischt werden und anschließend das polymere Bindemittel in Form einer wäßrigen Dispersion zugesetzt wird.

10. Verwendung des Dränbetons nach Anspruch 1 zur Herstellung eines Fahrbahnbelags.

## Claims

1. A drainage concrete having a void volume of from 10 to 35% by volume, containing a hydraulic binder selected from the group consisting of cements and a polymeric binder in the form of an anionic styrene/(meth)acrylate copolymer, and also aggregates having particle sizes in the range from 2 to 32 mm.

2. A drainage concrete as claimed in claim 1, wherein the minimum film-formation temperature (MFT) of the polymeric binder is > 30°C.

3. A drainage concrete as claimed in claim 1, wherein the minimum film-formation temperature (MFT) of the polymeric binder is from 35 to 50°C.

4. A drainage concrete as claimed in claim 1, wherein the void volume is from 15 to 30% by volume.

5. A drainage concrete as claimed in claim 1, wherein the proportion of the polymeric binder is from 5 to 40% by weight, based on the mass of the hydraulic binder.

6. A drainage concrete as claimed in claim 1, wherein the proportion of the hydraulic binder is from 10 to 30% by weight, based on the mass of the drainage concrete.

7. A drainage concrete as claimed in claim 1, wherein the particle size of the aggregate is from 5 to 8 mm.

8. A process for producing a drainage concrete as claimed in claim 1, which comprises mixing the hydraulic binder, the polymeric binder, the aggregates and, if desired, further additives and/or additional components with water.

9. The process as claimed in claim 8, wherein aggregates and hydraulic binder are first mixed with water and the polymeric binder is subsequently added in the form of an aqueous dispersion.

10. Use of the drainage concrete as claimed in claim 1, for producing road surfacing.

## Revendications

1. Béton de drainage avec 10 à 35 % en volume de volume de cavités, contenant un liant hydraulique de la série des ciments et un liant polymère sous forme d'un copolymère anionique styrène/(méth)acrylate ainsi que des granulats ayant des granulométries dans le domaine de 2 à 32 mm.

2. Béton de drainage selon la revendication 1, caractérisé en ce que la température minimale de formation de film (MFT) du liant polymère est supérieure à 30 °C.

3. Béton de drainage selon la revendication 1, caractérisé en ce que la température minimale de formation de film (MFT) du liant polymère est de 35 à 50 °C.

4. Béton de drainage selon la revendication 1, caractérisé en ce que le volume de cavités est de 15 à 30 % en volume.

5. Béton de drainage selon la revendication 1, caractérisé en ce que la proportion du liant polymère est de 5 à 40 % en poids, par rapport à la masse du liant hydraulique.

6. Béton de drainage selon la revendication 1, caractérisé en ce que la proportion du liant hydraulique est de 10 à 30 % en poids par rapport à la masse du béton de drainage.

7. Béton de drainage selon la revendication 1, caractérisé en ce que la granulométrie du granulat est de 5 à 8 mm.

8. Procédé de fabrication d'un béton de drainage selon la revendication 1, par mélange du liant hydraulique, du liant polymère, des granulats et éventuellement d'autres adjuvants et/ou additifs avec de l'eau.

9. Procédé selon la revendication 8, caractérisé en ce qu'on mélange d'abord les granulats et le liant hydraulique avec de l'eau et on ajoute ensuite le liant polymère sous forme d'une dispersion aqueuse.

10. Utilisation du béton de drainage selon la revendication 1 pour réaliser un revêtement de chaussée.
